# EUROPEAN PATENT APPLICATION

(11) **EP 1 709 969 A1**
(43) Date of publication of application: **11.10.2006**
(21) Application number: 05102747.2
(22) Date of filing: 07.04.2005
(51) Int. Cl.: A61K 36/07

(54) **Health promoting dairy and food products containing mushroom glucan produced through fermentation of Grifola frondosa**

(71) Applicant: Praktijkonderzoek Plant en Omgeving B.V., 6708 PB Wageningen (NL)
(72) Inventor: Zhu, Yang, 3972 PZ, Driebergen-Rijsenburg (NL); Sonnenberg, Antonius Silvester Maria, 5809 BW, Leunen (NL); Van Loo, Eibertus Nicolaas, 6708 SL, Wageningen (NL)
(74) Representative: van Westenbrugge, Andries

(57) **Abstract**

The present invention deals with the production of food products with a health promoting effect, namely immune modulation in general, and lowering and/or stabilizing blood sugar levels. The food products concerned comprise polysaccharides from edible or medicinal mushrooms. These are produced through fermentation instead of conventional cultivation of mushrooms. Fermentation process can be done either in submerged cultures or in solid-state culture.

## Description

### FIELD OF THE INVENTION

The present invention relates to products comprising vegetative fungal mycelium and/or fungal polysaccharides (glucans and glucan/protein complexes) of fungi of the genus *Grifola*. Also provided are fermentation methods for producing the mycelium and/or the polysaccharides.

### BACKGROUND OF THE INVENTION

The population of elderly people is increasing in both developed and developing countries. To preserve quality of life, there will be an increasing demand by this target group for resources that have a health promoting or health maintaining effect. Foods and food supplements of natural origin, rather than pharmaceuticals, can offer an affordable solution for preventing diseases that are associated with aging such as high blood sugar levels (diabetic disorders), cardiovascular disease, cancer and many others.

Most natural products with health promoting effects originate from plants or animals. In the Far East such as China, Japan and Korea, also edible and medicinal mushrooms have a long history of use as traditional medicines. They are used as sole product or in combination with plants for both curative and preventive purposes. Nowadays, numerous functional foods containing ingredients from a selected number of medicinal mushrooms can be found on the shelf at department stores, pharmacies, supermarkets and reform shops in these countries. However, these products, although with great application potential and more and more scientific evidence, have not yet been produced in an economical attractive and technical reliable manner to fulfil the ever increasing market demands. In addition, the products are usually presented as capsules or pills, which hamper the popular application of the ingredients in Western countries, especially for the elderly, children and weak consumers. Further, existing products suffer from the disadvantages that mushroom taste and odour are associated with the products, which can make the product undesirable and can also prevent the development of food products where a mushroom taste or smell would be unacceptable to consumers. As already mentioned, other disadvantages of mushroom products are production costs and forms of application.

US patent No. 5773426 describes a product containing isolate from the mushroom *Grifola frondosa* to influence the blood sugar level (diabetes). The production method used the extraction of mushroom fruit body with hot water. The product formulated was then used as a pharmaceutical composition to treat and/or prevent non-insulin dependent diabetes (type II diabetes).

US patent No. 5854404 describes polysaccharide from the medicinal mushroom *Grifola frondosa* fruit bodies that have high immune modulating activity.

Both patents focus on the extraction of bioactive substances from mushroom fruit bodies and applying these polysaccharides in pharmaceutical products. The use of fruit bodies in products requires the cultivated mushroom and results in products which maintain a strong mushroom smell and/or favour (even when dried and ground). The production of fruit bodies is time consuming, laborious and leads to inconsistent quality. Heavy metal intoxication might occur if fruit bodies are consumed in high doses. In addition, the product in a pharmaceutical formulation prevents people from using it in a convenient way and is often also expensive.

The present inventors surprisingly found that the growth of fungi of the genus *Grifola* in fermentation cultures results in fungal mycelium and fungal polysaccharides which do not have a typical fungal taste or smell, but which do retain health beneficial properties. It was further surprisingly found that also the effect of the mycelium and polysaccharides on the texture (mouth feel) and viscosity of products was different from products where fruit bodies were used. Thus, clearly mycelium and polysaccharides obtained by fermentation have different physical properties and differ from fruit bodies and polysaccharides obtained from fruit bodies. These fmdings open the way for making food and feed products having a health promoting effect, but which lack the disadvantages associated with the use of fruit bodies. Further, fermentation methods were developed which enable easy, cheap and large scale production of mycelium and polysaccharides.

Another problem with the prior art fungal materials is the occurrence of proteases in the material. This presents a problem in food products, such as dairy products as the fungal proteases partially hydrolyze proteins present in the food product, thereby severely reducing the quality of the (dairy) food product. Currently, techniques such as heating or intensive purification must be used to inactivate the fungal proteases. Such techniques are both costly or undesired.

The present invention discloses methods of producing and purifying fungal materials and/or glucans/proteoglucans from fungi by which the fungal proteases are either inactivated or are removed from the product, thereby increasing the possibilities of using fungal materials in food, neutraceutical or pharmaceutical preparations. It was surprisingly found that, when using fermentation produced mycelium and polysaccharides derived from said mycelium, the protease problem associated with the use of fruiting body mycelium is absent or significantly reduced.

Thus, in summary, the present invention provides food products and food supplements (functional foods) comprising mushroom mycelium, glucans or glucan/protein complexes (proteoglucans) with health promoting effects, which are processed in the form that can be consumed in a very convenient way by the consumers. These novel products have the following advantages:
- neutral smell and flavour (i.e. substantially no mushroom smell or flavour);
- the bioactive ingredients (mycelium and/or glucans/proteoglucans) are homogenous and have a constant quality;
- fermentation processes are herein disclosed which are cheap (economically attractive) and produce high yields of homogenous products;
- Safety (without heavy metals that are usually accumulated by fruit bodies when grown on conventional substrates);
- the mycelium and/or polysaccharides are easy to suspend or dissolve, mix and/or homogenize in the designed products;
- the protease activity associated with prior art methods is substantially reduced or absent.

### DEFINITIONS

"Grifola" refers to fungal strains or isolates of the species of the genus Grifola, in particular *Grifola frondosa,* but also other species such as *Grifola albicans, Grifola umbellatus, Grifola gigantean* and *Grifola sordulenta*.

"Vegetative mycelium" refers herein to mycelium (fungal hyphae) which are grown under conditions wherein no fruiting bodies (reproductive mycelium) are produced.

"Fruiting body" or "fruiting body derived mycelium" refers to the specialized macroscopic reproductive structures, or mycelium of these, which produce fungal spores.

"Fungal polysaccharides" refer to glucans and/or proteoglucans (i.e. glucan/protein complexes) produced by the fungal cells. The polysaccharides are either "extracellular" (EPS), i.e. secreted into the culture medium, or intracellular, i.e. attached to the fungal cell walls or within the cells. Both are encompassed by the term "fungal polysaccharides".

"Fungal polysaccharides obtained by/obtainable by fermentation" refers herein to the polysaccharides obtained from fermentation cultures, either from the fermentation broth (medium) or from the fungal mycelium.

"Fermentation" or "fermentation culture" refers to growth cultures used for growth of vegetative fungal mycelium.

"Submerged fermentation" (SmF) refers to fermentation wherein the mycelium is submerged in liquid medium. Different submerged fermentation methods are encompassed hereby, such as (submerged) batch cultures, (submerged) fed-batch cultures or step-up cultures.

"Solid-state fermentation" (SSF) refers to fermentation wherein the mycelium is not submerged in liquid medium. The growth culture comprises a high dry matter / water ratio.

"Food" or "food product" refers to both liquid, semi-solid and solid food products (nutritional compositions), suitable for human and/or animal consumption.

"Food supplement" refers to a composition ingested by humans in addition to the normal daily food intake. Generally, food supplements are in the form of tablets, powders, sachets, pills, etc.

"Food product ingredient" or "food supplement ingredient" refers to a product which is suitable for being added to a final food product, or food supplement, or during the production process of a food product, or food supplement.

The term "comprising" is to be interpreted as specifying the presence of the stated parts, steps or components, but does not exclude the presence of one or more additional parts, steps or components.

In addition, reference to an element by the indefinite article "a" or "an" does not exclude the possibility that more than one of the element is present, unless the context clearly requires that there be one and only one of the elements. The indefinite article "a" or "an" thus usually means "at least one".

### DETAILED DESCRIPTION

### Methods according to the invention

In one embodiment fermentation methods for producing *Grifola* mycelium and/or *Grifola* polysaccharides having novel properties are provided.

In particular, a method for preparing a food product, or a food or food supplement ingredient, is provided, comprising:
a) growing the fungus *Grifola* in a fermentation culture,
b) obtaining the mycelium and/or fungal polysaccharides from the fermentation culture
c) optionally drying and/or grinding the mycelium, and optionally
d) adding the mycelium and/or the fungal polysaccharides to a food or food base (i.e. using the mycelium and/or fungal polysaccharides as an ingredient for a food product or food supplement).

In this method any strain or isolate of a fungus of the genus *Grifola* may be used. Preferably, strains of the species *Grifola frondosa* are used. Such strains are available in the art (for example from fungal culture collections) or can be isolated using known methods. Examples of suitable *G. frondosa* strains are CBS 317.29, CBS 480.63 and CBS 100292 (available at the Centraalbureau voor Schimmelcultures, Uppsalalaan 8, NL-3584 CT, Utrecht, Netherlands).

The type of inoculum used is not relevant to the method. Thus, the fungal strain or isolate may be grown on agar medium and agar plugs or mycelium obtained from the medium may be used as inoculum. Likewise, liquid cultures may be grown (seed cultures) which are then used as inoculum for the fermentation culture. Preferably fresh inoculum is used.

In one embodiment, the fermentation culture is preferably a liquid (submerged; SmF) fermentation culture, especially selected from a batch culture, a fed-batch culture or a step-up culture.

SmF may, for example, be started with an inoculum size of 5% and carried out at a temperature range between about 15 °C and 35 °C, preferably at about 25 °C, depending on the strains used. Aeration is preferably kept at about 0.5 VVM (volume air per volume liquid per minute). Agitation is preferably kept between about 150 and 400 rpm to ensure a dissolved oxygen (DO) concentration in the fermentation broth above 30%.

The liquid culture medium for SmF suitably comprises a carbon source, a nitrogen source, minerals, vitamins and other necessary trace elements. Suitable carbon sources can be glucose, fructose, maltose, lactose, sucrose, starch, hemicelluloses and cellulose, or mixes thereof preferably containing sucrose and glucose. The concentration of the carbon source is suitably between about 5 and 40 g per liter, preferably about 20 g per liter (dry weight of carbon source per volume of medium). The nitrogen source used may, for example, be peptone, yeast extract, meals of oil seeds, other proteins, amino acids and inorganic nitrogen compounds or mixtures of any of these. By preference, peptone and yeast extract are used as nitrogen source. Suitable concentration of the nitrogen source is between about 5 and 20 g per liter, preferably about 10 g per liter (dry weight of nitrogen source per volume of medium).

In one embodiment high yields of desired fungal mycelium and/or polysaccharides are achieved by using fed-batch fermentation. The reason is that the production of polysaccharides through a fermentation process results in an increased viscosity of the fermentation broth with increasing fermentation duration. In addition, the consumption of the carbon and nitrogen source causes substrate limitation for further growth of the fungi and production of glucans / proteoglucans. In order to maintain maximal fungal growth rates and especially glucan / proteoglucan production rate, the present invention shows that use of the fed-batch technique increases the efficiency of mycelium and/or polysaccharide productivity (product amount per volume substrate per time). The fed batch technique showed a significant increase of mycelium and of polysaccharide production, compared to standard batch cultures. A "significant increase" refers to an increase by at least about 10, 20, 30, 40, 50, 60, 70, 80, 90% or more (even up to 100 %), compared with a standard batch technique without the use of a fed batch technique. The significant increase of mycelium can simply be measured by comparing fresh or dry weight of the mycelium produced in the fed-batch culture compared to mycelium produced in a standard batch culture. The increase in (extracellular and/or intracellular) polysaccharides can be determined using methods described further below, such as extraction of polysaccharides from the medium and/or from the fungal mycelium. Inversely, cost price of fungal polysaccharide with a fed batch technique is reduced by at least 10 to 70 % compared to standard batch fermentation.

In yet another embodiment the method uses a step-up culture, which results in a significant increase in the production of extracellular polysaccharides (EPS). Thus, the main product in this method is EPS, while the mycelium may be discarded or alternatively also used (either as such or polysaccharides may be extracted from the mycelium). EPS, mainly water soluble glucans, can suitably be applied to products that require a high degree of smooth mouth-feel, structure/texture and that may not comprise any (or only minimal) mushroom smell and/or taste (see further below). In addition, compared with other SmF techniques, step-up culture delivers the highest production of EPS in the fermentation broth. EPS yield is thus preferably at least 10, 20, 30, 40, 50, 60, 70, 80, 90%, or more, higher than the EPS yield of batch or fed-batch cultures. The EPS can be easily obtained from the culture by first removing the solid components (e.g. by filtration or centrifugation) and then either the liquid component may be used directly, or the EPS may be further concentrated (e.g. by evaporation of part of the liquid) or the EPS may be extracted, using for example alcohol precipitation (see also the Examples). The ethanol precipitate of EPS can be directly weighted for quantification after drying to constant weight.

The product harvested for further use is either the mycelium (which may be used as such or from which polysaccharides may be extracted) and/or the extracellular polysaccharides, present in the culture medium.

Thus, in one embodiment the mycelium is harvested after a sufficient period of fermentation. This may be done, for example, by filtration or centrifugation. The mycelium itself (comprising bioactive glucans and proteoglucans) may then be used fresh, or the mycelium may be dried or freeze dried (lyophilized) prior to use. The fresh, dried or freeze-dried mycelium may also be ground or macerated prior to use. It may be formulated into a suitable food or food supplement or added to any food base during the production process of a food product, as will be further described below and in the Examples.

In another embodiment the polysaccharides (glucans and/or proteoglucans) are harvested, either as extra cellular polysaccharides (EPS) from the fermentation broth or extracted from the fungal cell walls.

It is also an object of the invention to provide a solid state fermentation (SSF) method for the production of *Grifola* mycelium and/or polysaccharides.

Suitable fermentation substrates for SSF are wheat bran, sorghum, barley, whole wheat, defatted soybeans and all other grains, legumes, quinoa, amaranth and by-products thereof or mixtures of any of these. Preferably, wheat bran or mixture of wheat bran and defatted soybeans delivers best productions of targeted polysaccharides.

Thus, a method for preparing a food product, or a food or food supplement ingredient, is provided, comprising:
a) growing the fungus *Grifola* in a solid-state fermentation culture,
b) obtaining the solid component of the culture (comprising fungal mycelium and one or more fermentation substrates)
c) optionally drying and/or grinding the solid component, and optionally
d) adding the solid component to a food or food base.

Mycelium produced by solid-state fermentation may be used together with the rest of the substrate in food or food supplement products. Thus, preferably all components used in the method are food-grade components and may be used as ingredients of a food or food supplement.

In the methods where the mycelium is the main product, further purification of fungal glucans / proteoglucans may be carried out by, for example, extraction with hot water and subsequently precipitation by ethanol.

Thus, where substantially purified form of glucans and/or proteoglucans are needed (such as in higher doses applications), a separation process may be used to recover glucans and/or proteoglucans from the mycelium produced by fermentation. For example, water, preferably hot water between 50 and 100 °C, preferably 95 °C, is mixed with mycelium in a ratio between 2 to 1 and 10 to 1, preferably 5 to 1 (for instance 5 ml water with 1 g mycelium). The extraction of glucans and/or proteoglucans from the mycelium takes about 30 minutes up to 4 or more hours, but for a glucan recovery over 90% the extraction takes the time between 3 and 4 hours.

The substantially purified polysaccharides preferably comprise an average molecular weight of about 25kD to about 2500 kD.

In one embodiment all compounds used in the above methods are food grade, i.e. are suitable for human and/or animal consumption.

### Products according to the invention

The above methods yield either *Grifola* mycelium obtainable/obtained by fermentation and/or *Grifola* polysaccharides obtainable/obtained by fermentation. As shown in the Examples, both the fermentation produced mycelium and the polysaccharides are different from known fruiting body produced mycelium or polysaccharides, in various properties. Especially, when used as ingredients in food or food supplement products, they result in products having a significantly lower or even absence of mushroom smell and/or taste, compared to analogous products made using fruiting body derived mycelium or polysaccharides. Also, physical properties are different, as, for example, the addition of ground fruiting body mycelium to yoghurt, results in yoghurt losing its texture / viscosity, while addition of the fermentation produced mycelium according to the invention results in yoghurt having normal viscosity. This indicates that the protease problem associated with the use of fruiting body derived material is not present in the products of the invention. The fungal products obtained by fermentation are, therefore, novel in their physio-chemical properties.

Primary products provided herein are fermentation derived *Grifola* mycelium and/or fermentation derived *Grifola* polysaccharides (substantially purified either from the mycelium and/or from the fermentation medium). These products may be in fresh, liquid, semi-solid or solid form (e.g. powder form). One or more (mixtures) of these products may be used as ingredients to make nutritional compositions, i.e. a food composition or a food supplement composition (both secondary products).

A suitable amount of the primary product(s) (fermentation derived mycelium and/or polysaccharides) may be added to a food product, for example to milk, milk-based drinks, yoghurt, yoghurt-based drinks, cream, ice-cream, milk based deserts, or butter, etc. Alternatively, it may be added as ingredient during the production process of a food product, i.e. it may be added to one or more food bases. For example, a suitable amount (e.g. at least about 5-20 g dried mycelium or at least about 500-1200mg purified polysaccharides per litre) may be added to milk before, after or together with one or more species of lactic acid bacteria.

A skilled person can easily determine which amounts are suitably added at which stage of a production process or to a final product. The amount will depend on the type of product and on the desired effect. When the product is a food composition, the average daily consumption of the food will also determine the amount. For example, the daily amount may be present in such an amount that the (average) daily consumption of the product results in the desired daily intake dosage.

Food and food supplement products according to the invention preferably are substantially free of (most preferably completely lack) mushroom taste and/or smell. This can be determined using for example sensory tests, wherein subjects analyse products for smell, texture, taste, mouth-feel, etc. using standardized methods. Most preferably the taste and/or smell is not any different than the taste and/or smell of the same product lacking mycelium and/or polysaccharides according to the invention. Preferably, viscosity of products according to the invention is also not influenced negatively, compared to products lacking the mycelium and/or polysaccharides according to the invention. Viscosity can be analysed visually or can be measured using known methods. Also, when the taste and/or smell and/or viscosity is compared to the analogous product comprising and analogous amount of fruiting body derived mycelium, the taste and/or smell of the product according to the invention comprises substantially less mushroom smell and/or taste and/or is substantially more viscous.

Preferred food products comprising a suitable amount of mycelium (e.g. fresh, dried, and/or ground) and/or polysaccharides are dairy products, such as fermented dairy products, yoghurt, milk or milk-based drinks, yoghurt-based drinks, cheese and butter, ice-cream, deserts (e.g. custards), etc. Also encompassed are non-dairy products, such as margarine, bread, noodles, etc., all comprising fungal polysaccharides and/or mycelium or mycelium derivatives (e.g. ground mycelium).

Food composition preferably comprises carbohydrates and/or proteins and/or lipids suitable for human consumption. The compositions may or may not contain other bioactive ingredients, such as microbial strains (e.g. probiotic bacteria, lactic acid bacteria), and prebiotics, which support the probiotic strains. Also flavourings, antioxidants, vitamins, minerals, colouring agents, etc may be present.

Similarly, the primary product(s) may be used to formulate a food supplement. This can be done using known methods. A food supplement may comprise one or more carriers, stabilizers, prebiotics and the like. Food supplements are preferably suitable for oral ingestion, and may be liquid, solid or semi-solid. For example the composition may be in the form of a powder packed in a sachet which can be dissolved in water, fruit juice, milk or another beverage.

Also provided are pharmaceutical compositions comprising one or more primary products for treatment or prevention of hyperglycemia or diabetes, preferably type II diabetes. Suitable amounts can be tested by, for example, carrying out standard dose-response tests on animal or human subjects. Other bioactive compounds may be present in the composition, such as drugs for the treatment of diabetes.

The amount of mycelium and/or polysaccharides present in the fmal food or food supplement products are preferably such that daily intake is equivalent to an intake of at least about 100 - 10,000 mg, preferably 250 - 5000 mg dried mycelium, more preferably about 750-1500 mg dried mycelium. Higher amounts, such as 2, 5, 10, 50 g per day are also envisaged. Expressed in amount polysaccharide, the daily amount is preferably about 6 to 600 mg, preferably 45 to 90 mg.

It is understood that daily amounts may be present in a single dose (suitable for intake once a day) or may be divided into several dosages, such as dosages suitable for intake 2, 3, 4 or more times daily. Also, dosages for intake once or twice a week are provided. The total daily amount may also be divided into both food and food supplements, which together result in the intake of the required dose.

Intake of daily doses of the food and food supplement products of the invention preferably have a beneficial effect (or health promoting effect) on the human subject, such as a beneficial effect on the immune system (immune modulation), and on the blood-sugar levels. Especially regular intake, preferably daily or weekly, over longer periods, stabilizes and/or lowers blood sugar levels, preferably blood glucose levels are lowered significantly. A significant reduction in blood glucose levels refers a reduction of at least about 10, 20, 30, 40, 50% or more. The intake of blood-sugar lowering medicaments is at the same time reduced by at least about 10, 20, 30, 40, 50 or 100%.

Although any subject may ingest the products according to the invention, the products are particularly beneficial for children, elderly and weak people. Also, especially subjects with elevated blood sugar (hyperglycemia) or at risk of developing elevated blood sugar levels and obese or overweight subjects benefit especially from regular intake.

The following non-limiting examples illustrate the invention. Unless stated otherwise, the practice of the invention will employ standard conventional methods of molecular biology, pharmacology, microbiology or biochemistry. Such techniques are described in Sambrook and Russell (2001) Molecular Cloning: A Laboratory Manual, Third Edition, Cold Spring Harbor Laboratory Press, NY, in Volumes 1 and 2 of Ausubel et al. (1994) Current Protocols in Molecular Biology, Current Protocols, USA and Remington's Pharmaceutical Sciences, Mack Publishing Company, Philadelphia, Pa., 17th ed. (1985), Microbiology: A Laboratory Manual (6th Edition) by James Cappuccino, Laboratory Methods in Food Microbiology (3rd edition) by W. Harrigan (Author) Academic Press, all incorporated herein by reference.

### EXAMPLES

### Production of glucans / proteoglucans

### Example 1: Submerged batch fermentation

Well grown strain of *Grifola frondosa* on potato dextrose agar (25 °C, 10 d) is transferred to a 5 liter seed culture composed of (g/L) glucose 20; peptone 5; KH₂PO₄ 1; MgSO₄ 0,3; CaCl₂ 0,1; FeSO₄ 0,15 (mg); MnSO₄ 0,1 (mg), CuSO₄ 0,1 (mg); and trace amount of vitamins. After 5-12 days cultivation at 25 °C, the seed culture is used as inoculum for a 100 liter fermentor containing the same liquid medium but including additionally 10 g of yeast extract per liter broth.

Mycelium containing glucan and glucan/protein complex is harvested by filtrating the fermentation broth or centrifuging followed by washing several times with water and collecting the mycelium. Harvested mycelium is dried at 40 - 80 °C, preferably at about 56 °C. Dried mycelium is ground and mixed with other ingredients to be applied to food products (see application examples below).

Yield of dried mycelium was 10 g/L liquid medium with proprietary strain of *Grifola frondosa* and 8 g/L liquid medium with an earlier described *Grifola frondosa* strain.

### Example 2: Solid-state fermentation

Wheat bran is mixed with tap water in a ratio of 6:4 (w/w) and sterilized at 121 °C for 40 min. *Grifola frondosa* grown well in agar slants as used in Example 1 is used to inoculate the sterilized substrate after cooling. The cultivation of the mushroom by SSF is carried out at 25 °C and >97% relative humidity for 6-12 days. The mixture of fungal mycelium and bran residue is used as ingredients in the application of food products. The mycelium content after SSF in this way reaches between 5% and 25% (dry weight of mycelium per dry weight of SSF medium).

### Example 3: Fed-batch fermentation

Basic medium is the same as described in Example 1. Fermentation starts with a working volume occupying 50% of the fermentor. After 96 h of fermentation, nutrients such as carbon and nitrogen source become limiting factors to further cell growth and the accumulation of desired polysaccharides. A feeding nutrient composed of inorganic or organic nitrogen source is used, in addition to other ingredients in the basic medium, with preference of using ammonium sulphate as nitrogen source. Feeding rate is adjusted to achieve maximal growth rate of the fungus. After another 5 - 9 days of fermentation, products are harvested with the same methods as described in Example 1.

Yield of desired polysaccharides after applying fed-batch fermentation was up to 40% higher than standard batch fermentation. Tests were carried out with a standard *Grifola frondosa* strain as described elsewhere.

### Example 4: Step-up culture of Grifola frondosa

Fungi grown well on agar medium (with a layer of cellophane) scratched aseptically with a sterile spoon and blended together with 50 ml medium (g/L: glucose 4, yeast extract 6, peptone 2, MgSO4 0.2, K2HPO4 0.2, MnSO4 0.1 (mg)) in a previously sterilized blender were poured into a 250 ml sterile flask . The inoculated medium in the flask was cultivated on a shaker at 25 °C at a speed of 150 rpm for 7 days. The content in the flask was then aseptically blended in a previously sterilized blender and used as inoculums for the step-up culture carried out in a 2000 ml flask with 200 ml medium as described above. Alternatively, the seed culture (50ml in 250 ml flask) was inoculated in a stir and aerated fermentor or airlift fermentor containing the same medium. The fermentation was performed at the same condition as seed-culture for 10 to 14 days. The fermentation broth was then filtered through a nylon filter to separate mycelium and supernatant. Extra cellular polysaccharides were recovered by adding ethanol to the supernatant in a ratio of 4:1 and kept at 4 °C overnight. The precipitate was then centrifuged at 8000 x g for 30 min. The lyophilized powder is used in applications (see examples below). Alternatively, the supernatant of the fermentation broth is concentrated first by vacuum evaporation and then precipitated by ethanol followed by the same procedure as described above. By this, the amount of ethanol used in the down-stream processing will be significantly reduced.

### Products comprising mycelium and/or polysaccharides

Ingredients containing fungal mycelium obtained from examples 1, 2, 3 and 4 are added to dairy products. The amount of dried mycelium or purified glucans used in the products is based on a daily intake of about 250 to 5000 mg, but preferably about 750 to 1500 mg dried mycelium per person (equivalent to about preferably 60 to 90 mg glucans).

### Example 5: Application in yoghurt (static fermentation)

Ground mycelium or purified glucans from Example 1, 2, 3 and 4 and from similar production processes is added to fresh milk before or after inoculating the lactic acid bacteria for yoghurt fermentation. Lactic acid bacteria are, for example, *Lactobacillus, Lactococcus, Streptococcus, Bifidobaterium* or a mixture of any of these. The amount of dried mycelium ranges from about 5 to 20 gram per liter milk, preferably 8 g per liter milk. In case purified glucans are used, the amount of glucans ranges from about 500 to 1200 mg.

Fresh milk (free of antibiotics), after mixing with appropriate amount of glucans or mycelium, was pre-heated at 60 - 65 °C and homogenized at 15 - 20 MPa followed by sterilizing at 100 °C for 5 min. After cooling down to 45 °C, a pre-culture of lactic acid bacteria was added (inoculum's size 1 - 3%). The mixture is then filled in proper packages with the size ranging from 150 ml till 2 liters according to the normal consumption demand. The fermentation was carried out at 42 - 43 °C for the first 4 hours and then cooled down to 10 - 15 °C. Subsequently, the yoghurt formed is ready for marketing and consumption.

Alternatively, glucans or purified glucans are added after processed fresh milk and inoculums have been added to the package.

### Example 6: Application in yoghurt (mixing fermentation type, homogenized yoghurt)

Fresh milk (free of antibiotics) is mixed with other necessary additives such as sugar, stabilizers, as well as mycelium or glucans from Examples 1 through 4. The mixture was then pre-heated to 60 - 65 °C and homogenized at 15 - 20 Mpa. Then the mixture is sterilized at 95 - 100 °C for 5 min. After cooling to 45 °C, the mixture is inoculated with a pre-culture of lactic acid bacteria (inoculation size 1 - 3%). The fermentation was then carried out at 42 - 43 °C for 4 hours followed by disturbing the formed yoghurt by proper agitation. The homogenized yoghurt was then cooled down to 10 - 15 °C. Sterilized and cooled jam can be added to the product at this stage. Mycelium of fungi or purified glucans was added at this stage of the process following by bottling (packaging). The product can be stored at 1 - 5 °C and is ready for marketing and consumption.

Comparison of the effect of adding glucans and/or proteoglucans from Example 1 to 4 to yoghurt and of adding dried and ground material from fruiting bodies of *Grifola frondosa*, showed that glucans produced in Example 1 to 4 showed no protease activity while the ground material from fruiting bodies caused hydrolysis of proteins causing the yoghurt to loose its viscosity and texture. No such decline in viscosity and texture was found with the use of materials from Examples 1 to 4. Similarly, standard ground material from fruiting bodies added to yoghurt gave a typical mushroom taste and smell and gave a different mouth feel compared to yoghurt without ground fruiting bodies, while material produced according to example 1 to 4 does not give yoghurt a typical mushroom taste, smell or textural change.

### Example 7: Glucan containing margarine

Fungal glucan obtained from fermentation broth concentrated by vacuum evaporation is applied in margarine like product. The product has 80% of margarine fat (from commercial origin) and 20% aqueous part that contains 2 parts of glucan (% of total weight) from Example 4. Other additives such as monoglyceride, lecithin, beta-carotene colorant, salt and citric acid are added to the mixture following the normal commercial process standard.
The aqueous part and the fat part are mixed, kept at 50 °C until processing and then processed through a conventional Votator line to obtain a fat-continuous spread with a dispersed aqueous phase.

### Example 8: Glucan containing cheese

Mycelium obtained from fermentation in examples 1, 3, and 4 is applied in certain cheese products as these will be consumed daily by the consumers conveniently.
For example, the application of glucan-containing mycelium in Gouda cheese product. The mixture containing 250 kg of milk with a fat content of 1.25%; 1.8% weight of washed quark; 47.5 g of CaCl2₂H₂O; 27.5 g KNO₃; 0.7% weight of acidulent culture (commercially available) and 0.03% weight of rennet. Renneting is carried out at a temperature of 30 °C and thereafter a normal Gouda cheese making process is used following adding 2% of ground mycelium from examples 1 to 4 or from similar production processes.

### Example 9: Health-promoting effects of mycelium and mycelium extracts

An experiment is carried out to demonstrate the health promoting effect of the products according to the invention. A group of 20 diabetic type II volunteers (with blood glucose levels between 150 and 280 mg/dL) were given the product of Example 6 or Example 7. During the first 30 days of the experiment they were using their normal medicine (daily 2.5 to 5.0 mg oral glyburide depending on the blood sugar lever of the volunteers). A control group with the same number of healthy volunteers was provided with a product without the glucans from Example 6 or Example 7 as placebo. The experiment group volunteers were provided daily 150 ml of the product of Example 6 or Example 7. After 30 days of intake, 10 volunteers showed a 50 % reduction of blood glucose level, 5 had a 30% reduction and 3 of 20% while 2 volunteers showed no significant reduction of blood glucose levels. The group was further provided with the same product for another 30 days. The results showed that 80 % of the volunteers would be able to reduce their medicine intake by 50% for stabilizing their blood level while 20% could stabilize blood glucose levels without the use of normal diabetes type 2 medicines. For the control group, the blood sugar level was stabilized within the trial period.

### References

1) US Patent 5854404 (1998) Antitumor substance extracted from Grifola
2) US Patent 5773426 (1998) Proteoglucan and antidiabetic drug thereof
3) Talpur NA, Echard BW, Yasmin T, Bagchi D, Preuss HG (2003) Effects of niacin-bound chromium, Maitake mushroom fraction SX and (-)-hydroxycitric acid on the metabolic syndrome in aged diabetic Zucker fatty rats. Molecular and Cellular biochemistry, 252:369-377
4) Talpur NA, Echard BW, Fan AY, Jaffari O, Bagchi D, Preuss HG (2002) Antihypertensve and metabolic effects of whole Maitake mushroom powder and its fractions in two rat strains. Molecular and Cellular Biochemistry, 237:129-136
5) Konno S, Aynehchi S, Dolin DJ, Schartz AM, Choudhury MS, Tazaki H (2002) Anticancer and hypoglycaemic effects of polysaccharides in edible and medicinal Maitake mushroom (Grifola frondosa (Dicks,: Fr) S. F. Gray). International Journal of Medicinal Mushrooms, 4:185-195
6) Kurushima H, Kodama N, Nanba H (2000) Activities of polysaccharides obtained from Grifola frondosa on insulin-dependent diabetes mellitus induced by streptozotocin in mice. Mycoscience, 41:473-480
7) Horio H, Ohtsuru M (2001) Maitake (Grifola frondosa) improve glucose tolerance of experimental diabetic rats. Journal of Nutritional Science and Vitaminology, 47:57-63
8) Kubo K, Aoki H, Nanba H (1994) Anti-diabetic activity present in the fruit body of Grifola frondosa (Maitake). Biological and Pharmaceutical Bulletin, 17:1106-1110
9) Konno S, Tortorlis DG, Fullerton SA, Samadi AA, Hettiarachchi J, Tazaki H (2001) A possible hypoglycaemic effect of Maitake mushroom on type 2 diabetic patients. Diabetic Medicine, 18:1010
10) Manohar V, Talpur NA, Echard BW, Lieberman S, Preuss HG (2002) Effects of a water-soluble extract of Maitake mushroom on circulating glucose/insulin concentrations in KK mice. Diabetes, Obesity and Metabolism, 4:43-48
11) Horio H, Ohtsuru M (1995) Effects of administration of Grifola frondosa on glucose tolerance and glucosuria in rats with experimental diabetes. Journal of the Japanese Society of Nutrition and Food Science, 48:299-305
12) Lee BC, Bae JT, Pyo H et al (2004) Submerged culture conditions for the production of mycelial biomass and exopolysaccharides by the edible basidiomycetes Grrifola frondosa. Enzyme and Microbial Technol. 35:369-376
13) Zhang S, Shen R, Yue Y (2003) Effects of media and conditions on growth of Grifola frondosa. Journal of Plant Resources and Environment. 12:21-25
14) Xuan Y, Sun P, Zhu L, Zhao M (2002) Studies on submerged fermentation of Grifola frondosa and analysis of its mycelia. Edible fungi of China. 21:27-29
15) Du W, Hua Z (2004) Technology of submerged culture of Grifola frondosa and its influence factors. Transactions of the Chinese Society of Agricultural Engineering. 20:231-234
16) Hozova B, Kuniak L, Kelemenova B (2004) Application of β-glucans isolated from mushrooms Pleurotus ostreatus and Lentinus edodes for increasing the bioactivity of yoghurts. Czech. J. Food Sci. 22:204-214.

## Claims

1. A food or food supplement comprising vegetative fungal mycelium and/or fungal polysaccharides, **characterized in that** said mycelium and said polysaccharides are obtained by fermentation of a fungus of the genus *Grifola*.

2. The food or food supplement according to claim 1, wherein said vegetative mycelium or said polysaccharides are obtained by submerged fermentation or solid phase fermentation.

3. The food according to claim 1 or 2, wherein said food is a dairy product, preferably yoghurt, cheese, milk, butter, margarine, custard, a yoghurt- or milk- based drink or ice cream.

4. The food according to any one of claims 1-3, wherein said food does not have a mushroom smell or mushroom taste.

5. The food or food supplement according to any one of the preceding claims, wherein said fungus is *Grifola frondosa*.

6. Use of vegetative fungal mycelium or fungal polysaccharides, obtained by fermentation of a fungus of the genus *Grifola frondosa*, for the preparation of a food or food supplement.

7. A method for preparing a food product or ingredient for a food product comprising:
a) growing the fungus *Grifola frondosa* in a fermentation culture,
b) obtaining the mycelium or fungal polysaccharides from the fermentation culture
c) optionally drying and/or grinding the mycelium, and optionally
d) adding the mycelium and/or the fungal polysaccharides to a food or food base.

8. A method for preparing a food product or ingredient for a food product comprising:
a) growing the fungus *Grifola frondosa* in a solid-state fermentation culture,
b) obtaining the solid component of the culture
c) optionally drying and/or grinding the solid component, and
d) optionally adding the solid component to a food or food base.

9. The method according to claim 7, wherein said fermentation culture is a submerged fermentation culture.

10. The method according to any one of claim 7 to 9, wherein the food or food base is a dairy food or food base.
